# EUROPÄISCHE PATENTSCHRIFT

(11) **EP 2 802 526 B1**
(45) Veröffentlichungstag und Bekanntmachung des Hinweises auf die Patenterteilung: **08.07.2015**
(21) Anmeldenummer: 13700076.6
(22) Anmeldetag: 04.01.2013
(51) Int. Cl.: B66F 9/14, F16C 29/00, F16C 29/02, F16C 29/10

(54) **FÜHRUNGSEINRICHTUNG FÜR EIN TELESKOPIERBARES LASTAUFNAHMEMITTEL**
GUIDE MECHANISM FOR A TELESCOPIC LOAD HANDLING DEVICE
DISPOSITIF DE GUIDAGE POUR UN MOYEN DE RÉCEPTION DE CHARGE, ASSOCIÉ DE MANIÈRE TÉLESCOPIQUE

(30) Priorität: 11.01.2012 DE 102012000551
(43) Veröffentlichungstag der Anmeldung: 19.11.2014
(73) Patentinhaber: SSI Schäfer Peem GmbH, 8051 Graz (AT)
(72) Erfinder: BUCHMANN, Rainer, A-8046 Graz (AT)
(74) Vertreter: Witte, Weller & Partner Patentanwälte mbB
(86) Internationale Anmeldenummer: PCT/EP2013/050111
(87) Internationale Veröffentlichungsnummer: WO 2013/104568

(56) Entgegenhaltungen:
- WO-A1-2011/018553
- US-A1- 2009 314 582

## Beschreibung

Die vorliegende Erfindung betrifft eine Führungseinrichtung für ein teleskopierbares Lastaufnahmemittel (nachfolgend auch kurz "LAM" genannt) eines Regalbediengerät (nachfolgend auch kurz "RBG" genannt), insbesondere eines Einebenenbediengeräts bzw. eines Shuttles gemäß der Oberbegriff des Anspruchs 1.

Das Dokument US 4,988,262 A offenbart ein Shuttle mit vergrößerter Reichweite. Das Dokument DE 20 2004 004 620 U1 offenbart ein Lagersystem. Das Dokument DE 41 12 126 A1 offenbart eine Vorrichtung zur Positionierung einer fahrbaren Einrichtung.

WO 2011/018553 A1 offenbart eine Führungseinrichtung für ein teleskopierbares Lastaufnahmemittel eines Regalbediengerät mit einer ersten Schiene und einer zweiten Schiene; einem ersten Lager, wobei das Lager einen Lagerkörper mit einer Oberseite und einer Unterseite aufweist, die sich gegenüberliegen, wobei die erste Schiene an die Oberseiten gekoppelt ist und wobei die zweite Schiene an die Unterseiten gekoppelt ist;wobei der Lagerkörper eingerichtet ist, die Schienen in einer Ein- und Ausfahrrichtung, vorzugsweise formschlüssig linear, zu führen; wobei der Lagerkörper mindestens eine erste und eine zweite Arretiereinrichtung aufweist, wobei jede Arretiereinrichtung aktivierbar und desaktivierbar ist; wobei jede erste Arretiereinrichtung angeordnet ist, um in einem aktivierten Zustand eine Relativbewegung zwischen dem Lagerkörper und der ersten Schiene in der Ein- und Ausfahrrichtung zu sperren und um in einem desaktivierten Zustand die Relativbewegung zuzulassen; und wobei jede zweite Arretiereinrichtung angeordnet ist, um in einem aktivierten Zustand die Relativbewegung zwischen dem Lagerkörper und der zweiten Schiene in der Ein- und Ausfahrrichtung zu sperren und um in einem desaktivierten Zustand die Relativbewegung zuzulassen.

Herkömmliche teleskopierbare Lastaufnahmemittel, wie z.B. Teleskopgabeln, weisen die unterschiedlichsten Mechanismen zum Ein- und Ausfahren der Gabeln auf. Die Gabeln können z.B. ein Zahnprofil aufweisen, welches mit einem Zahnrad zusammenwirkt, um die Gabel ein- und auszufahren.

Es ist eine Aufgabe der vorliegenden Erfindung, eine verbesserte Führungseinrichtung für ein LAM bereitzustellen, welches teleskopierbar ist und wobei die Führungseinrichtung Kippmomente, die im ausgefahrenen Zustand auftreten, möglichst gut kompensiert.

Diese Aufgabe wird durch eine Führungseinrichtung für ein teleskopierbares LAM eines RBG, insbesondere eines Shuttles, gelöst, wobei die Führungseinrichtung aufweist: eine erste Schiene und eine zweite Schiene; ein erstes Lager und ein zweites Lager, wobei jedes der Lager einen Lagerkörper mit einer Oberseite und einer Unterseite aufweist, die sich gegenüberliegen, wobei die erste Schiene an die Oberseiten gekoppelt ist und wobei die zweite Schiene an die Unterseiten gekoppelt ist; wobei jeder der Lagerkörper eingerichtet ist, die Schienen in einer Ein- und Ausfahrrichtung, vorzugsweise linear, zu führen; wobei jeder der Lagerkörper mindestens eine erste und eine zweite Arretiereinrichtung aufweist, wobei jede Arretiereinrichtung aktivierbar und desaktivierbar ist; wobei jede erste Arretiereinrichtung im Bereich der entsprechenden Oberseite angeordnet ist, um in einem aktivierten Zustand eine Relativbewegung zwischen dem Lagerkörper und der ersten Schiene in der Ein- und Ausfahrrichtung zu sperren und um in einem desaktivierten Zustand die Relativbewegung zuzulassen; wobei jede zweite Arretiereinrichtung im Bereich der entsprechenden Unterseite angeordnet ist, um in einem aktivierten Zustand die Relativbewegung zwischen dem Lagerkörper und der zweiten Schiene in der Ein- und Ausfahrrichtung zu sperren und um in einem desaktivierten Zustand die Relativbewegung zuzulassen.

Die Lager, die zwischen den Schienen angeordnet sind, gewährleisten eine hohe Stabilität, auch wenn die Schienen in maximal ausgefahrenen Stellungen sind. Durch die Arretiereinrichtungen können hohe Kippmomente aufgenommen werden, wie sie üblicherweise beim Greifen von Gebinden (Behälter, Tablare, Paletten, etc.) auftreten. Die teleskopierbaren Schienen sind stets sicher linear geführt. Es versteht sich, dass die vorliegende Erfindung auch auf mehrfach teleskopierbare Lastaufnahmemittel oder andere Anwendungen außerhalb der Intralogistik anwendbar ist.

Vorzugsweise sind die Arretiereinrichtungen in Form von Kugelschnappvorrichtungen ausgebildet, die jeweils eine Kugel aufweisen, die im aktivierten Zustand aus der Ober- oder Unterseite vorsteht, um formschlüssig in eine Vertiefung in der entsprechenden Schiene einzugreifen, wobei die Vertiefung einer vorgegebenen Neutralposition oder Ausfahrposition der Schiene entspricht, und die im desaktivierten Zustand in den Lagerkörper zurückgezogen ist, um die Relativbewegung nicht zu blockieren.

Weiter ist es bevorzugt, wenn zumindest zwei Vertiefungen vorgesehen sind, wobei eine erste Vertiefung die Neutralposition der Schienen zueinander und eine zweite Vertiefung die Ausfahrposition einer der Schienen festlegt.

Bei einer besonderen Ausgestaltung sind die Vertiefungen in einer Seite der jeweiligen Schiene vorgesehen, die den Lagerkörpern zugewandt ist.

Die Vertiefungen sind somit nicht von außen sichtbar und behindern bspw. ein Abstellen von Gebinden auf den Schienen nicht.

In einer weiteren bevorzugten Ausführungsform ist jeder Lagerkörper spiegelsymmetrisch aufgebaut und weist eine Grundfläche auf, die seitlich zu einem zentralen Abschnitt einen ersten und einen zweiten Flügelabschnitt aufweist, wobei die Arretiereinrichtungen vorzugsweise in einem der Flügelabschnitte vorgesehen sind.

Insbesondere weist jede der Schienen einen im Wesentlichen U- oder C-förmigen Querschnitt in einer Ebene senkrecht zur Ein- und Ausfahrrichtung auf, um die Lagerkörper seitlich, vorzugsweise formschlüssig, zu umgreifen.

Vorzugsweise ist ferner ein Antrieb vorgesehen, der zumindest an eine der Schienen oder zumindest eines der Lager gekoppelt ist, um die Schiene ein- und auszufahren.

Ferner wird ein Lastaufnahmemitte bzw. ein Regalbediengerät mit einer erfindungsgemäßen Führungseinrichtung vorgeschlagen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1A-D: Seitenansichten verschiedener Zustände einer Führungseinrichtung gemäß der Erfindung am Beispiel eines LAM;
- Fig. 2: eine perspektivische Ansicht eines Lagerkörpers;
- Fig. 3: eine Seitenansicht (Fig. 3A), eine Draufsicht (Fig. 3B) und eine Vorderansicht (Fig. 3C) des Lagerkörpers der Fig. 2;
- Fig. 4: eine Seitenansicht (Fig. 4A) eines LAM im eingefahrenen Zustand, eine Draufsicht (Fig. 4B) der Fig. 4A, eine Seitenansicht (Fig. 4C) des LAM der Figuren 4A und 4B im ausgefahrenen Zustand sowie eine Draufsicht (Fig. 4D) des LAM der Fig. 4C; und
- Fig. 5: eine Schnittansicht entlang der Linie V-V in Fig. 4D.

In der nachfolgenden Beschreibung der Erfindung werden gleiche Teile und Merkmale mit gleichen Bezugszeichen versehen, wobei die in der gesamten Beschreibung enthaltenen Offenbarungen sinngemäß auf gleiche Teile und Merkmale mit gleichen Bezugszeichen übertragen werden können. Lageangaben wie z.B. "oben", "unten", "links", "rechts", "horizontal", "vertikal", etc. sind auf die unmittelbar beschriebene Figur bezogen und bei einer Lageänderung sinngemäß auf die neue Lage zu übertragen.

Ferner ist zu beachten, dass Richtungsangaben und Orientierungen zugrunde gelegt werden, die sich grundsätzlich an die in der (Intra-)Logistik üblichen Bezeichnung anlehnen. Folglich wird die Längsrichtung (RBG-Fahrrichtung bzw. Längsrichtung eines Lagers) mit "X", die Tiefe (Breite) mit "Z" und die "vertikale" Höhe mit "Y" bezeichnet. Die exemplarisch gezeigten Koordinatensysteme sind vorzugsweise kartesisch.

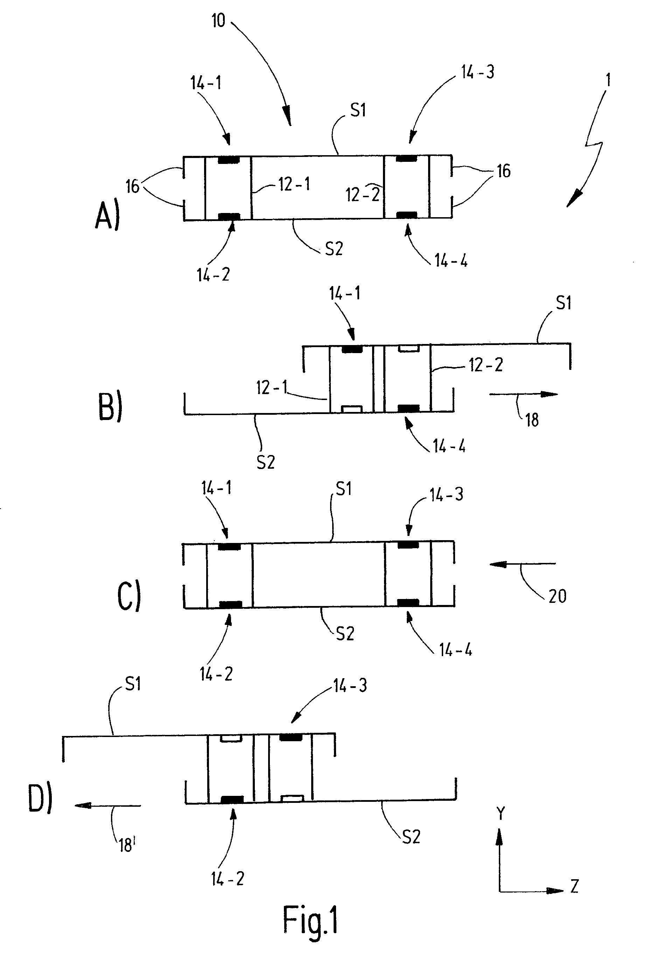

Fig. 1 zeigt stark vereinfachte Seitenansichten einer Führungseinrichtung 1 gemäß der Erfindung in verschiedenen Stellungen, die exemplarisch in ein LAM 10 eines RBG oder Shuttle integriert ist. Die Führungseinrichtung 1 weist eine (obere) Schiene S1 und eine (untere) Schiene S2 auf, zwischen denen zumindest zwei Lagereinrichtungen bzw. Lager, vorzugsweise Gleitlager 12-1 und 12-2, sowohl arretierbar als auch frei verschieblich gelagert sind. Im Nachfolgenden wird exemplarisch ausschließlich auf Gleitlager 12 eingegangen. Es versteht sich, dass die vorliegende Erfindung auch auf andere Lagertypen anwendbar ist. Die Arretierbarkeit wird mit Hilfe von Arretiereinrichtungen 14 erreicht, auf die nachfolgend noch näher eingegangen wird. Längsenden der Schienen S1 und S2 können mit mechanischen Anschlägen 16 versehen sein, um zu verhindern, dass sich die Schienen S1 und S2 in ihren jeweiligen Extrempositionen von den Gleitlagern 12 trennen. Greifeinrichtungen oder Ähnliches, mit denen die Schienen 12 verbunden sind, um Ladehilfsmittel ein- und auszulagern, sind nicht gezeigt.

Gleitlager stellen im Maschinen- und Gerätebau eine häufig verwendete Lagerbauart dar. Im Gleitlager haben die beiden sich relativ zueinander bewegenden Teile üblicherweise direkten Kontakt. Sie gleiten aufeinander gegen einen Widerstand, der durch die Gleitreibung verursacht wird. Der Widerstand kann durch die Wahl einer reibungsarmen Materialpaarung, durch Schmierung oder durch Erzeugen eines Schmierfilms (Vollschmierung), der die beiden Kontaktflächen voneinander trennt, niedrig gehalten werden. Die Lagereinrichtung kann aber auch nach dem Prinzip der rollenden Abtragung aufgebaut sein.

Fig. 1A zeigt eine Seitenansicht des LAM 10 in einer Normalstellung, in welche die Schiene S1 oder S2 nicht ausgefahren ist. In dieser Stellung überlappen sich die vorzugsweise gleich langen Schienen S1 und S2 vollständig. In der Seitenansicht der Fig. 1B ist die Schiene S1 maximal nach rechts ausgefahren. Ein Pfeil 18 verdeutlicht eine Ausfahrbewegung. Das erste Gleitlager 12-1 ist starr mit der oberen Schiene S1 verbunden und dabei entlang der unteren Schiene S2 beweglich. Das zweite Gleitlager 12-2 ist starr mit der unteren Schiene S2 verbunden, so dass sich die erste Schiene S1 frei entlang des zweiten Gleitlagers 12-2 bewegen kann. Die Seitenansicht der Fig. 1C zeigt das LAM 10 wieder in der Normalstellung gemäß Fig. 1A, wenn die obere Schiene S1 aus der in der Fig. 1B gezeigten ausgefahrenen Stellung zurückbewegt wird, wie es durch einen Pfeil 20 angedeutet ist. Die Seitenansicht der Fig. 1D zeigt die obere Schiene S1 in einer maximal nach links ausgefahrenen Stellung, wie es durch einen Pfeil 18' angedeutet ist. Um in diese Stellung zu gelangen, ist die obere Schiene S1 starr mit dem zweiten Gleitlager 12-2 verbunden und das erste Gleitlager 12-1 ist starr mit der unteren Schiene S2 verbunden.

Die Arretiereinrichtungen 14 sind in der Fig. 1 in zwei unterschiedlichen Zuständen dargestellt. In einem aktivierten Zustand sind die Arretiereinrichtungen 14 dunkel veranschaulicht. Im desaktivierten Zustand sind die Arretiereinrichtungen 14 hell veranschaulicht. In einem aktivierten Zustand verbinden die Arretiereinrichtungen 14 die jeweilige Schiene S1 und/oder S2 starr mit den entsprechenden Gleitlagern 12-1 und/oder 12-2. Die Arretiereinrichtungen 14 können die Gleitlager 12 mechanisch (z.B. mit einer Schnappkugelvorrichtung) oder auf andere Weise mit den Schienen S1 und S2 verbinden. Die Arretiereinrichtungen 14 können z.B. magnetisch wirken, indem ein Elektromagnet unter Strom gesetzt wird, um die Schiene S1 oder S2 zu fixieren. In der Fig. 1A sind alle Arretiereinrichtungen 14-1 bis 14-4 arretiert. Das Lastaufnahmemittel bzw. LAM 10 befindet sich in der Fig. 1A in einer Mittelstellung. Die Schienen S1 und S2 befinden sich in ihrer jeweiligen Neutralposition. Die obere Schiene S1 kann mit einem nicht dargestellten Antrieb verbunden sein, um sie in der Z-Richtung ein- und auszufahren. Die Schiene S2 ist starr mit dem (ebenfalls nicht dargestellten RBG, z.B. mit dessen Hubtisch) verbunden, die dann wiederum eine Nulllage definiert.

Wenn die Schiene S1 in der positiven Z-Richtung ausgefahren werden soll, werden zumindest die Arretiereinrichtungen 14-2 und 14-3 desaktiviert. Die Arretiereinrichtungen 14-1 und 14-4 können aktiviert bleiben. Die Desaktivierung der zweiten Arretiereinrichtung 14-2 des ersten Gleitlagers 12-1 bewirkt, dass das erste Gleitlager 12-1 entlang der zweiten Schiene S2 bewegt werden kann. Die Aktivierung der ersten Arretiereinrichtung 14-1 bewirkt, dass sich das erste Gleitlager 12-1 zusammen mit der ersten Schiene S1 bewegt, die es in der Fig. 1B durch die Ausfahrbewegung 18 in Form eines Pfeils nach rechts angedeutet ist. Die Desaktivierung der ersten Arretiereinrichtung 14-3 des zweiten Gleitlagers 12-2 bewirkt, dass sich die erste Schiene S1 entlang des zweiten Gleitlagers 12-2 bewegen kann. Die Aktivierung der zweiten Arretiereinrichtung 14-4 des zweiten Gleitlagers 12-2 bewirkt, dass sich das zweite Gleitlager 12-2 nicht relativ zur zweiten Schiene S2 während der Ausfahrbewegung 18 bewegt.

In der Fig. 1C gezeigten Mittelstellung sind alle Arretiereinrichtungen 14-1 bis 14-4 wieder aktiviert. Um aus der ausgefahrenen Lage, wie sie in Fig. 1B gezeigt ist, in die Mittelstellung der Fig. 1C zu gelangen, bleiben die Arretiereinrichtungen 14-1 bis 14-4 in den in der Fig. 1B gezeigten Zuständen, solange bis die Mittelstellung der Fig. 1C erreicht ist.

Um die obere Schiene S1 in der negativen Z-Richtung auszufahren, wie es durch einen Pfeil 18' in der Fig. 1D angedeutet ist, ist die erste Arretiereinrichtung 14-1 desaktiviert und die zweite Arretiereinrichtung 14-2 des ersten Gleitlagers 12-1 aktiviert, wobei die erste Arretiereinrichtung 14-3 des zweiten Gleitlagers 12-2 aktiviert und die zweite Arretiereinrichtung 14-4 desaktiviert ist.

Es versteht sich, dass ein Wechsel zwischen dem aktivierten und dem desaktivierten Zustand durch eine (nicht gezeigte) übergeordnete Steuerung aktiv geregelt werden kann. Dennoch ist es auch möglich, wie es nachfolgend noch näher erläutert werden wird, passiv oder mechanisch induziert zwischen dem aktivierten und dem desaktivierten Zustand zu wechseln.

Die Anschläge 16 bewirken bei den Ausfahrbewegungen 18 bzw. 18', dass die Gleitlager 12 im Falle eines Ausfalls der entsprechenden Arretiereinrichtungen 14 dennoch an die gewünschten Positionen bewegt werden. Betrachtet man exemplarisch die Ausfahrbewegung 18 (vgl. Figuren 1A und 1B), so würden die Anschläge 16 für den Fall, dass alle Arretiereinrichtungen 14 ausfallen, dafür sorgen, dass das erste Gleitlager 12-1 nach rechts bewegt wird, wohingegen das zweite Gleitlager 12-2 am rechten äußeren Rand gehalten wird. Die Arretiereinrichtungen 14 werden in diesem Sinne lediglich für eine Bewegung zurück in die Mittelstellung (vgl. Übergang Figuren 1B zu 1C) benötigt, um das erste Gleitlager 12-1 gemeinsam mit der oberen Schiene S1 in die Mittelstellung zurückzubewegen. Die aktivierte Arretiereinrichtung 14-4 verhindert, dass das zweite Gleitlager 12-2 während der Einfahrbewegung 20 nach links bewegt wird.

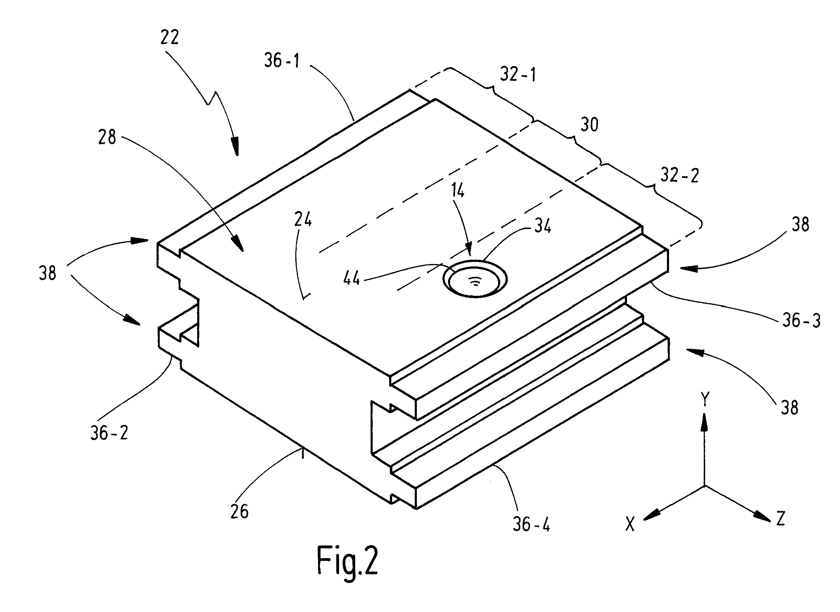

Fig. 2 zeigt eine perspektivische Ansicht eines Lagerkörpers 22 von einem der Gleitlager 12-1 und 12-2 der Fig. 1. Der Lagerkörper 22 weist eine Oberseite 24 und eine Unterseite 26 auf, die vorzugsweise plan ausgebildet sind. Die Oberseite 24 und die Unterseite 26 liegen sich, vorzugsweise parallel, gegenüber. Die Oberseite 24 ist in der Fig. 1 einer Unterseite der oberen Schiene S1 zugewandt. Die Unterseite 26 ist in der Fig. 1 einer Oberseite der unteren Schiene S2 zugewandt.

Eine Grundfläche 28 des Lagerkörpers 22 ist hier exemplarisch rechteckig gewählt. Es versteht sich, dass andere Geometrien ausgewählt werden können, wie z.B. eine T-förmige Grundfläche. Der Lagerkörper 22 kann in einen zentralen Abschnitt 30 und seitlich daran angrenzender Flügelabschnitte 32-1 und 32-2 unterteilt werden. Die Arretiereinrichtungen 14 können in jedem der Abschnitte 30 und 32 angeordnet werden. In der Fig. 2 ist die Arretiereinrichtung 14 im zweiten Flügelabschnitt 32-2 angeordnet. Vorzugsweise sind die beiden Arretiereinrichtungen 14 in gegenüberliegenden Flügelabschnitten 32 angeordnet, so dass die in der Fig. 2 nicht dargestellte Arretiereinrichtung 14 im Bereich der Unterseite 26 im ersten Flügelabschnitt 32-1 angeordnet ist. Die in der Fig. 2 gezeigte Arretiereinrichtung 14 ist in einer Öffnung 34 in der Oberseite 24 im zweiten Flügelabschnitt 32-2 angeordnet.

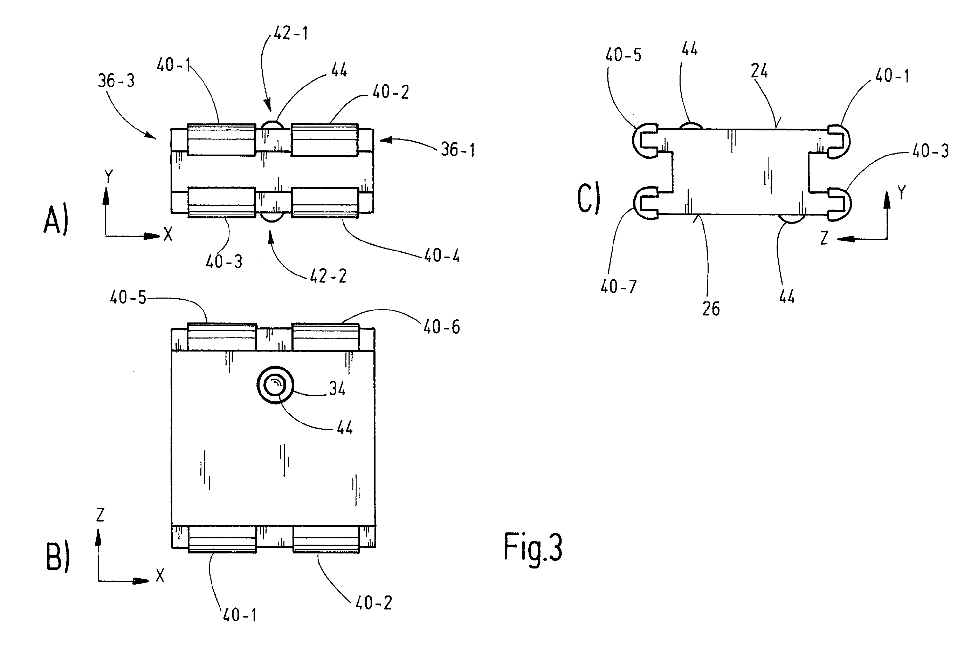

Im äußeren Bereich sind auskragende Nasen 36 vorgesehen. Die Nasen 36, von denen exemplarisch pro Flügelabschnitt 32 zwei Stück vorgesehen sind, können zur Befestigung von Gleitelementen 40 (vgl. Fig. 3) dienen, auf denen die Schienen S1 und S2 gleitend bewegt werden. Die Nasen 36 stellen somit Verbindungsabschnitte 38 dar, wo die Schienen S1 und S2 an den Lagerkörper 22 koppeln. Die Nasen 36 können C-förmig angeordnet sein.

Fig. 3 zeigt eine Seitenansicht (Fig. 3A), eine Draufsicht (Fig. 3B) und eine Vorderansicht (Fig. 3C) des Lagerkörpers 22 der Fig. 2, der mit Gleitelementen 40 ausgestattet ist. Jede Nase 36 ist exemplarisch mit zwei Gleitelementen 40 versehen, die z.B. aufgesteckt sein können. Jede der vier Nasen 36 ist exemplarisch mit zwei Gleitelementen 40 ausgestattet. Es versteht sich, dass jede Nase 36 auch nur mit einem einzigen durchgängigen Gleitelemente 40 ausgestattet sein könnte. Die Nasen 36 selbst können als Gleitelemente 40 ausgebildet sein.

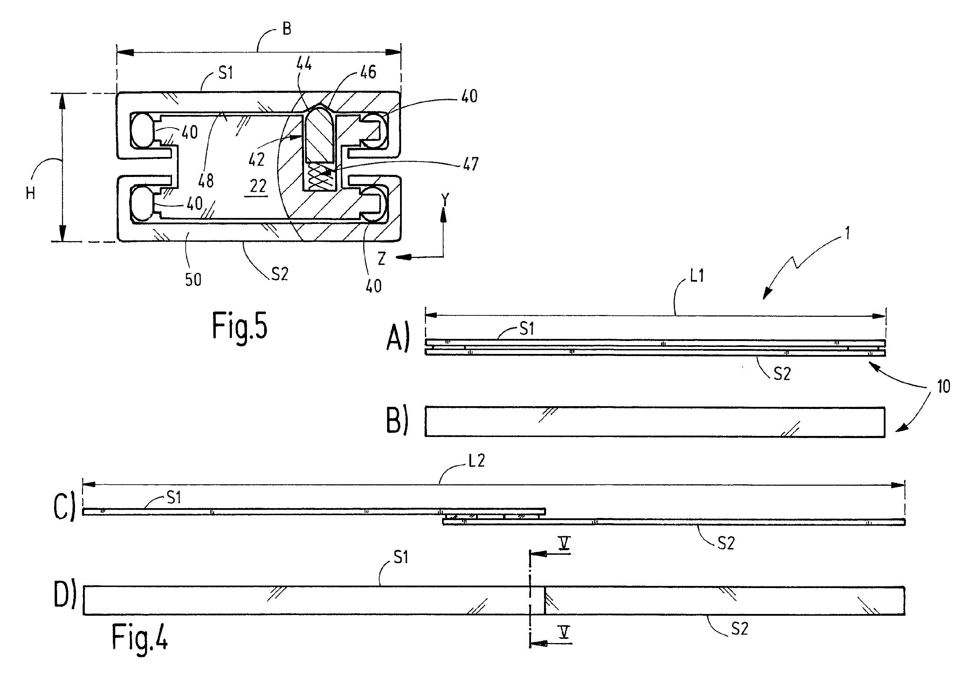

In der Vorderansicht der Fig. 4C erkennt man, dass die Arretiereinrichtungen 14 auf gegenüberliegenden Seiten 24 und 26 in gegenüberliegenden Flügelabschnitten 32-1 und 32-2 vorgesehen sind.

Die Arretiereinrichtungen 14 sind hier exemplarisch in Form von Kugelschnappvorrichtungen 42 ausgebildet, von denen pro Lagerkörper 22 vorzugsweise zwei Kugelschnappvorrichtungen 42-1 und 42-2 vorgesehen sind. Die Kugelschnappvorrichtungen 42 weisen jeweils eine Kugel bzw. einen kugelförmigen Stift 44 auf, der aus der Öffnung 34 (vgl. Fig. 2) im aktivierten Zustand hervorsteht. Dies wird im Zusammenhang mit Fig. 5 noch näher erläutert werden.

Fig. 4 zeigt in der Seitenansicht der Fig. 4A und der Draufsicht der Fig. 4B die Führungseinrichtung 1 der Erfindung, die wiederum in ein LAM 10 integriert ist, in der Mittelstellung. In der Seitenansicht der Fig. 4C und der Draufsicht der Fig. 4D ist das LAM 10 in einer ausgefahrenen Stellung gezeigt, und zwar in der nach links ausgefahrenen Stellung. Die Fig. 4D enthält eine imaginäre Linie V-V zur Verdeutlichung der Fig. 5, die eine teilweise geschnittene Ansicht entlang der Linie V-V zeigt. Die Länge L1 der Führungseinrichtung 1 bzw. des LAM 10 in der Mittelstellung trägt exemplarisch 640 mm, wohingegen die Länge L2 im (maximal) ausgefahrenen Zustand exemplarisch 1140 mm beträgt.

Die Arretiereinrichtung 14 ist in Form einer Kugelschnappvorrichtung 42 ausgebildet, die eine Kugel bzw. einen kugelförmigen Stift 44 aufweisen kann, der vorzugsweise mit einer Federeinrichtung 47 vorgespannt ist. Das Element 44 wird durch die Federeinrichtung 47 aus dem Lagerkörper 22 hinausgedrückt.

Im zusammengebauten Zustand der Führungseinrichtung 1 umgreifen die Schienen S1 und S2 den Lagerkörper 22, und insbesondere die Nasen 36, im Wesentlichen formschlüssig. Die Schienen S1 und S2 sitzen auf den Gleitelementen 40 auf, die vorzugsweise einen niedrigen Reibungskoeffizienten aufweisen. Die Kugelschnappvorrichtung 42 greift in der Fig. 5, vorzugsweise formschlüssig, in eine Vertiefung 46 ein, die in einer Seite 48 der Schiene S1 vorgesehen ist, die dem Lagerkörper 22 im zusammengebauten Zustand der Führungseinrichtung 1 zugewandt ist. Vorzugsweise weisen die Schienen S1 und S2 jeweils zwei Vertiefungen 46 auf, die an solchen Stellen angeordnet sind, die die Extremstellungen (vgl. z.B. Figuren 1A und 1B) repräsentieren. Wenn der Antrieb Kraft auf die Schiene S1 ausübt, kann die Kugel 44 außer Eingriff mit der Vertiefung 46 kommen, so dass eine Relativbewegung zwischen den Gleitlager 12 und der entsprechenden Schiene S1 oder S2 möglich ist. Die Federvorspannung definiert den zugehörigen Schwellenwert.

## Patentansprüche

1. Führungseinrichtung (1) für ein teleskopierbares Lastaufnahmemittel (10) eines Regalbdiengerät, insbesondere eines Shuttles, mit:
einer ersten Schiene (S1) und einer zweiten Schiene (S2);
einem ersten Lager (12-1) und einem zweiten Lager (12-2), wobei jedes der Lager (12) einen Lagerkörper (22) mit einer Oberseite (24) und einer Unterseite (26) aufweist, die sich gegenüberliegen, wobei die erste Schiene (S1) an die Oberseiten (24) gekoppelt ist und wobei die zweite Schiene (S2) an die Unterseiten (26) gekoppelt ist;
wobei jeder der Lagerkörper (22) eingerichtet ist, die Schienen (S1, S2) in einer Ein- und Ausfahrrichtung (Z), vorzugsweise formschlüssig linear, zu führen;
wobei jeder der Lagerkörper (22) mindestens eine erste und eine zweite Arretiereinrichtung (14-1, 14-2) aufweist, wobei jede Arretiereinrichtung (14) aktivierbar und desaktivierbar ist;
wobei jede erste Arretiereinrichtung (14-1, 14-3) im Bereich der entsprechenden Oberseite (24) angeordnet ist, um in einem aktivierten Zustand eine Relativbewegung (18, 20) zwischen dem Lagerkörper (22) und der ersten Schiene (S1) in der Ein- und Ausfahrrichtung (Z) zu sperren und um in einem desaktivierten Zustand die Relativbewegung (18, 20) zuzulassen; und
wobei jede zweite Arretiereinrichtung (14-2, 14-4) im Bereich der entsprechenden Unterseite (26) angeordnet ist, um in einem aktivierten Zustand die Relativbewegung (20, 18) zwischen dem Lagerkörper (22) und der zweiten Schiene (S2) in der Ein- und Ausfahrrichtung (Z) zu sperren und um in einem desaktivierten Zustand die Relativbewegung (20, 18) zuzulassen.

2. Führungseinrichtung nach Anspruch 1, wobei die Arretiereinrichtungen Kugelschnappvorrichtungen (42) sind, die jeweils eine Kugel (44) aufweisen, die im aktivierten Zustand aus der Ober- oder Unterseite (24, 26) vorsteht, um formschlüssig in eine Vertiefung (46) in der entsprechenden Schiene (S1, S2) einzugreifen, wobei die Vertiefung (46) einer vorgegebenen Neutralposition oder Ausfahrposition der Schiene (S1, S2) entspricht, und die im desaktivierten Zustand in den Lagerkörper (22) zurückgezogen ist, um die Relativbewegung (18, 20) nicht zu blockieren.

3. Führungseinrichtung nach Anspruch 2, wobei jede der Schienen (S1, S2) mindestens zwei Vertiefungen (46) aufweist, wobei eine erste Vertiefung (46) die Neutralposition der Schienen (S1, S2) zueinander und eine zweite Vertiefung (46) die Ausfahrposition einer der Schienen (S1, S2) festlegt.

4. Führungseinrichtung nach einem der Ansprüche 2 oder 3, wobei die Vertiefungen (46) in einer Seite (48) derjeweiligen Schiene (S1, S2) vorgesehen sind, die den Lagerkörpern (22) zugewandt ist.

5. Führungseinrichtung nach einem der Ansprüche 1-4, wobei jeder Lagerkörper (22) spiegelsymmetrisch aufgebaut ist und eine Grundfläche (28) aufweist, die seitlich zu einem zentralen Abschnitt (30) einen ersten und einen zweiten Flügelabschnitt (32-1, 32-2) bildet, wobei die Arretiereinrichtungen (14) vorzugsweise in einem der Flügelabschnitt (32) vorgesehen sind.

6. Führungseinrichtung nach einem der Ansprüche 1-5, wobei jede der Schienen (S1, S2) einen im Wesentlichen U- oder C-förmigen Querschnitt (50) in einer Ebene (XY) senkrecht zur Ein- und Ausfahrrichtung (Z) aufweist, um die Lagerkörper (22) seitlich, vorzugsweise formschlüssig, zu umgreifen.

7. Führungseinrichtung nach einem der Ansprüche 1-6, das ferner einen Antrieb aufweist, der zumindest an eine der Schienen (S1, S2) oder zumindest eines der Lager (12) gekoppelt ist, um die Schiene ein- und auszufahren.

8. Lastaufnahmemittel mit einer Führungseinrichtung nach einem der Ansprüche 1-7.

9. Regalbediengerät mit einem Lastaufnahmemittel nach Anspruch 8.

## Claims

1. A guiding device (1) of a telescopic load-handling device (10) of a storage and retrieval device, particularly of a shuttle, comprising:
a first rail (S1) and a second rail (S2):
a first bearing (12-1) and a second bearing (12-2), wherein each of the bearings (12) has a bearing body (22) comprising a top side (24) and a bottom side (26) which are arranged oppositely to each other, wherein the first rail (S1 is coupled to the top side (24) and wherein the second rail (S2) is coupled to the bottom side (26);
wherein each of the bearing bodies (22) is adapted to guide the rails (S1, S2) in a retracting and extracting direction (Z), preferably in a form-fitting linear manner;
wherein each of the bearing bodies (22) comprises at least first and second locking devices (14-1, 14-2), wherein each of the locking devices (14) can be activated and deactivated;
wherein each first locking device (14-1, 14-3) is arranged in a region of the corresponding top side (24) for blocking, in an activated state, a relative movement (18, 20) between the bearing body (22) and the first rail (S1) in the retracting and extracting direction (Z) and for allowing the relative movement (18, 20) in a deactivated state; and
wherein each second locking device (14-2, 14-4) is arranged in a region of the corresponding bottom side (26) for blocking, in an activated state, the relative movement (20, 18) between the bearing body (22) and the second rail (S2) in the retracting and extracting direction (Z) and for allowing the relative movement (20, 18) in a deactivated state.

2. The guiding device of claim 1, wherein the locking devices are ball-snapping devices (42) respectively comprising a ball (44) protruding in the activated state from the top side (24), or the bottom side (26), for engaging a recess (46) in the corresponding rail (S1, S2) in a form-fitting manner, wherein the recess (46) corresponds to a default neutral position, or an extraction position, of the rail (S1, S2), and which is retracted into to the bearing body (22) in the deactivated state in order not to block the relative movement (18, 20).

3. The guiding device of claim 2, wherein each of the rails (S1, S2) comprises at least two recesses (46), wherein a first recess (46) determines the neutral position of the rails (S1, S2) relative to each other and wherein a second recess (46) determines the extraction position of one of the rails (S1, S2).

4. The guiding device of claim 2 or 3, wherein the recesses (46) are provided in one side (46) of the respective rail (S1, S2) which faces the bearing bodies (22).

5. The guiding device of one of claims 1 to 4, wherein each bearing body (22) is structured in a mirror-symmetric manner and comprises a base area (28) forming, laterally relative to a central section (30), first and second wing sections (32-1, 32-2), wherein the locking devices (14) are preferably provided in one of the wing sections (32).

6. The guiding device of one of claims 1 to 5, wherein each of the rails (S1, S2) comprises a substantially U-shaped, or C-shaped, cross section (50) in a plane (XY) perpendicular to the retracting and extracting direction (Z) for surrounding the bearing body (22) laterally, preferably in a form-fitting manner.

7. The guiding device of one of the claims 1 to 6 further comprising a drive being coupled at least to one of the rails (S1, S2), or at least to one of the bearings (12), for retracting and extracting the rail.

8. A load-handling device comprising the guiding device of one of the claims 1-7.

9. A storage and retrieval device comprising the load-handling device of claim 8.

## Revendications

1. Dispositif de guidage (1) pour un moyen de réception de charge télescopable (10) d'un transstockeur, en particulier d'une navette, comprenant :
un premier rail (S1) et un deuxième rail (S2) ;
un premier palier (12-1) et un deuxième palier (12-2), chacun des paliers (12) présentant un corps de palier (22) avec un côté supérieur (24) et un côté inférieur (26), opposés l'un à l'autre, le premier rail (S1) étant accouplé aux côtés supérieurs (24) et le deuxième rail (S2) étant accouplé aux côtés inférieurs (26) ;
chacun des corps de palier (22) étant prévu pour guider, de préférence linéairement par engagement par correspondance de formes, les rails (S1, S2) dans une direction d'entrée et une direction de sortie (Z) ;
chacun des corps de palier (22) présentant au moins un premier dispositif de blocage et un deuxième dispositif de blocage (14-1, 14-2), chaque dispositif de blocage (14) pouvant être activé et désactivé ;
chaque premier dispositif de blocage (14-1, 14-3) étant disposé dans la région du côté supérieur correspondant (24) afin de bloquer, dans un état activé, un mouvement relatif (18, 20) entre le corps de palier (22) et le premier rail (S1) dans la direction d'entrée et dans la direction de sortie (Z) et de permettre, dans un état désactivé, le mouvement relatif (18, 20) ; et
chaque deuxième dispositif de blocage (14-2, 14-4) étant disposé, dans la région du côté inférieur correspondant (26), afin de bloquer, dans un état activé, le mouvement relatif (20, 18) entre le corps de palier (22) et le deuxième rail (S2) dans la direction d'entrée et la direction de sortie (Z) et de permettre, dans un état désactivé, le mouvement relatif (20, 18).

2. Dispositif de guidage selon la revendication 1, dans lequel les dispositifs de blocage sont des dispositifs d'encliquetage à bille (42) qui présentent chacun une bille (44) qui, dans l'état activé, dépasse du côté supérieur ou du côté inférieur (24, 26), afin de s'engager par correspondance de formes dans un renfoncement (46) dans le rail correspondant (S1, S2), le renfoncement (46) correspondant à une position neutre prédéfinie ou une position de sortie du rail (S1, S2), et qui, dans l'état désactivé, est rentrée dans le corps de palier (22) afin de ne pas bloquer le mouvement relatif (18,20).

3. Dispositif de guidage selon la revendication 2, dans lequel chacun des rails (S1, S2) présente au moins deux renfoncements (46), un premier renfoncement (46) établissant la position neutre des rails (S1, S2) l'un par rapport à l'autre et un deuxième renfoncement (46) établissant la position de sortie de l'un des rails (S1, S2).

4. Dispositif de guidage selon l'une quelconque des revendications 2 ou 3, dans lequel les renfoncements (46) sont prévus dans un côté (48) du rail respectif (S1, S2), qui est tourné vers les corps de palier (22).

5. Dispositif de guidage selon l'une quelconque des revendications 1 à 4, dans lequel chaque corps de palier (22) est réalisé avec une symétrie spéculaire et présente une surface de base (28) qui forme, latéralement par rapport à une portion centrale (30), une première et une deuxième portion d'aile (32-1, 32-2), les dispositifs de blocage (14) étant de préférence prévus dans l'une des portions d'aile (32).

6. Dispositif de guidage selon l'une quelconque des revendications 1 à 5, dans lequel chacun des rails (S1, S2) présente une section transversale (50) essentiellement en forme de U ou en forme de C dans un plan (XY) perpendiculaire à la direction d'entrée et à la direction de sortie (Z), afin de venir en prise autour des corps de palier (22) latéralement, de préférence par engagement par correspondance de formes.

7. Dispositif de guidage selon l'une quelconque des revendications 1 à 6, présentant en outre un entraînement qui est accouplé au moins à l'un des rails (S1, S2) ou au moins à l'un des paliers (12) afin de faire entrer et sortir les rails.

8. Moyen de réception de charge comprenant un dispositif de guidage selon l'une quelconque des revendications 1 à 7.

9. Transstockeur comprenant un moyen de réception de charge selon la revendication 8.
